# NOUVEAU FASCICULE DE BREVET EUROPEEN

(11) **EP 0 246 948 B2**
(45) Date de publication et mention de la décision concernant l'opposition: **01.12.1993**
(45) Mention de la délivrance du brevet: 08.08.1990
(21) Numéro de dépôt: 87401037.4
(22) Date de dépôt: 07.05.1987
(51) Int. Cl.: B60H 1/00

(54) **Installation de chauffage et de ventilation pour véhicule automobile**
Heiz- und Belüftungseinrichtung für ein Kraftfahrzeug
Heating and ventilating apparatus for a motor vehicle

(30) Priorité: 22.05.1986 FR 8607320
(43) Date de publication de la demande: 25.11.1987
(73) Titulaire: VALEO THERMIQUE HABITACLE, 78320 Le Mesnil-Saint-Denis (FR)
(72) Inventeur: Vincent, Philippe, F-28230 Epernon (FR)
(74) Mandataire: Lemaire, Marc

(56) Documents cités:
- DE-A- 3 203 424
- GB-A- 1 033 175
- PATENT ABSTRACTS OF JAPAN, vol. 9, no. 294 (M-431)[2017], 20 novembre 1985; & JP-A-60 131 312 (MATSUSHITA DENKI SANGYO K.K.) 13-07-1985
- PATENT ABSTRACTS OF JAPAN, vol. 7, no. 29 (M-191)[1174], 5 février 1983; & JP-A-57 182 514 (MITSUBISHI JUKOGYO K.K.) 10-11-1982
- PATENT ABSTRACTS OF JAPAN, vol. 8, no. 240 (M-336)[1677], 6 novembre 1984; & JP-A-59 120 513 (NISSAN JIDOSHA K.K.) 12-07-1984

## Description

L'invention concerne une installation de chauffage et de ventilation pour véhicule automobile, comprenant un échangeur de chaleur pour le chauffage de l'air admis dans l'habitacle du véhicule par des bouches de chauffage, et un conduit en dérivation sur l'échangeur de chaleur, pour amener de l'air frais dans l'habitacle du véhicule par des bouches d'aération.

Un volet est placé dans ce conduit pour régler le débit d'air frais amené dans l'habitacle du véhicule par les bouches d'aération. Il est par ailleurs déjà connu, notamment dans le document GB-A-1 033 175 de prévoir un orifice ou un passage de communication entre ce conduit et le conduit dans lequel est logé l'échangeur de chaleur, ainsi qu'un volet d'ouverture et de fermeture de cet orifice ou de ce passage de façon à ce que, dans la position d'ouverture de ce volet, de l'air chauffé par passage à travers l'échangeur de chaleur puisse gagner le conduit menant aux bouches d'aération et s'y mélanger à l'air frais qui circule dans ce conduit.

Cet agencement connu présente toutefois des inconvénients.

En effet, le volet qui est prévu pour fermer ou ouvrir le passage de communication donne une configuration dans laquelle, en position de pleine ouverture, il obture la sortie du conduit dans lequel est logé l'échangeur de chaleur en déviant la totalité de l'air chauffé par passage à travers l'échangeur vers le premier conduit par le passage de communication et de ce fait ne permet pas d'avoir dans l'habitacle de l'air chaud sortant des bouches de chauffage.

Pour éviter cet inconvénient, on a proposé dans le document DE-A-32 03 424, conforme au préambule de la revendication 1, à cet effet une installation de chauffage et de ventilation pour véhicule automobile, comprenant un conduit d'alimentation en air extérieur, se partageant en un premier conduit débouchant dans l'habitacle du véhicule par des bouches d'aération et un second conduit dans lequel est placé un échangeur de chaleur pour le chauffage de l'air et qui débouche dans l'habitacle par des bouches de chauffage, un premier volet monté dans le premier conduit pour régler le débit d'air frais qui y passe, un passage reliant le second conduit en aval de l'échangeur de chaleur au premier conduit, et un deuxième volet pour ouvrir et fermer ce passage, le premier volet étant monté dans le premier conduit en amont dudit passage, tandis que le second volet, dans sa position d'ouverture du passage, délimite dans le deuxième conduit un troisième conduit qui mène au passage et un quatrième conduit qui mène aux bouches de chauffage.

Dans ce document, le premier volet permet également de régler la quantité d'air froid admise à traverser l'échangeur de chaleur.

Dans une première forme de réalisation, lorsque le premier volet règle la quantité d'air admise à traverser l'échangeur de chaleur, la quantité d'air froid traversant le premier conduit est constante.

Dans une autre forme de réalisation, le premier volet permet de répartir la quantité d'air qui est destinée à être admise dans le premier conduit et simultanément à traverser l'échangeur de chaleur, un troisième volet est prévu dans tous les cas pour régler la température au niveau des bouches de chauffage.

Tout ceci complique l'installation de chauffage et de ventilation ainsi que son fonctionnement.

L'invention a pour but d'éviter ces inconvénients sans pour autant compliquer l'installation de chauffage et de ventilation ou augmenter son coût.

A cet effet, l'installation de chauffage et de ventilation pour véhicule automobile du type sus-indiqué est caractérisée en ce que lesdits moyens de transmission de mouvement sont tels que, lorsque le premier volet se trouve entre une première position de fermeture du premier conduit et une position intermédiaire d'ouverture, le second volet (30) se trouve dans sa position de fermeture du passage et lorsque ledit premier volet se trouve entre cette position intermédiaire d'ouverture et une deuxième position de fermeture du premier conduit, il commande l'ouverture complète du passage par le second volet, de sorte que de l'air chaud peut circuler dans le premier conduit vers les bouches d'aération et en ce que l'échangeur de chaleur est muni d'un moyen de réglage du débit de fluide caloporteur qui y circule, pour le réglage de la température de l'air dans les troisième et quatrième conduits.

Ainsi, d'une part, la perte de charge créée par le premier volet situé dans le premier conduit lorsque ce premier volet n'est pas en position de pleine ouverture ne se traduit pas par un refoulement d'air frais dans le second conduit en aval de l'échangeur de chaleur et, d'autre part, lorsque le deuxième volet est en position d'ouverture dudit passage, l'air frais qui aurait tendance à circuler dans ce passage du premier conduit vers le second conduit devrait nécessairement repasser à travers l'échangeur de chaleur avant de gagner le conduit menant aux bouches de chauffage.

On peut, uniquement par manoeuvre de l'organe de commande du premier volet, commander d'abord l'admission d'air frais dans l'habitacle par des bouches d'aération, avec un débit réglable entre une valeur nulle ou sensiblement nulle et une valeur maximale, puis l'admission d'air chaud dans l'habitacle par les bouches d'aération, à une température réglable entre celle de l'air frais et celle de l'air chaud introduit dans l'habitacle par les bouches de chauffage.

Cette commande est particulièrement simple et facile à manoeuvrer par l'occupant du véhicule.

De plus, la température de l'air de chauffage est réglée par commande du débit de fluide caloporteur circulant dans l'échangeur.

Selon une autre caractéristique de l'invention, le premier conduit mène à des bouches d'aération à l'avant de l'habitacle et/ou à des bouches de chauffage des places arrière dans l'habitacle.

Dans ce dernier cas, il devient possible d'amener la température de l'air de chauffage des places arrière à la valeur désirée.

Dans la description qui suit, faite à titre d'exemple, on se réfère aux dessins annexés, dans lesquels :
- la figure 1 représente schématiquement une installation de chauffage et de ventilation selon l'invention ;
- la figure 2 représente schématiquement une autre variante de réalisation de l'invention;
- la figure 3 est une vue schématique en perspective du volet de la figure 2;
- la figure 4 est une demi-vue en coupe selon la ligne V-V de la figure 2.

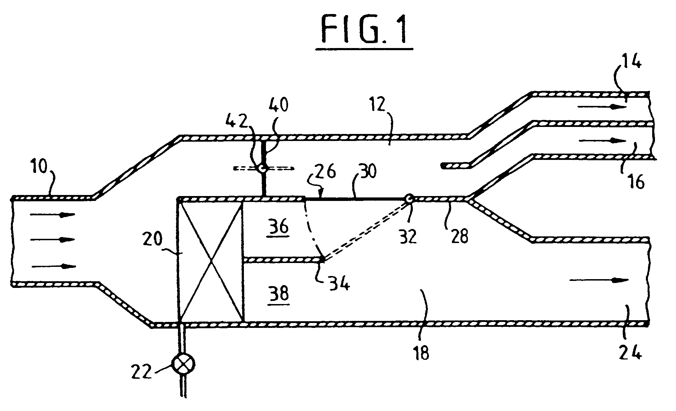

On se réfère d'abord à la figure 1 dans laquelle on a représenté les éléments essentiels d'une installation de chauffage et de ventilation selon l'invention, qui comprend un conduit 10 d'alimentation en air extérieur, qui se partage en un conduit 12 menant à des bouches d'aération 14 débouchant dans la partie avant de l'habitacle du véhicule ainsi qu'à des bouches de chauffage 16 débouchant dans la partie arrière de l'habitacle, pour le chauffage des places arrière, et en un deuxième conduit 18 dans lequel est disposé un échangeur de chaleur 20 alimenté en fluide caloporteur (en général le liquide de refroidissement du moteur à combustion interne du véhicule) par un robinet 22 ou un autre organe approprié de réglage de débit de fluide caloporteur. Ce conduit 18 communique avec l'habitacle du véhicule par des bouches de chauffage 24, situées en général dans la partie avant de l'habitacle.

Un orifice 26 de communication entre le premier conduit 12 et le second conduit 18 est formé dans une paroi 28 séparant ces deux conduits et est propre à être fermé et ouvert par un volet 30 pouvant occuper soit la position représentée en trait plein (position de fermeture de l'orifice 26), soit la position représentée en trait pointillé (position de pleine ouverture de l'orifice 26). Pour cela, le volet 30 est monté pivotant autour d'un axe 32 à l'extrémité de l'orifice 26 qui est la plus éloignée de l'échangeur de chaleur 20. Dans sa position de pleine ouverture, l'extrémité libre du volet 30 coopère sensiblement à étanchéité avec une cloison 34 qui partage le conduit 18 en deux conduits 36 et 38 partant de la face de sortie d'air de l'échangeur de chaleur 20. En fonction de la position du volet 30, le conduit 36 communique à son extrémité aval avec le conduit 18 qui mène aux bouches de chauffage 24, ou avec le premier conduit 12 qui mène aux bouches d'aération 14 et aux bouches 16 de chauffage des places arrière.

Le conduit 12 est quant à lui équipé d'un volet ou clapet d'obturation 40 qui se trouve en amont de l'orifice 26. Ce clapet 40 est monté à rotation autour d'un axe 42 et peut occuper toutes les positions intermédiaires entre sa position d'obturation représentée en trait plein et sa position de pleine ouverture représentée en trait pointillé. En fait, sous la commande de l'occupant du véhicule, le volet est mobile sur 180° autour de l'axe 42 entre une première position d'obturation du conduit 12 et une seconde position d'obturation de ce conduit, où le volet 40 est tourné de 180° par rapport à sa première position d'obturation.

Selon l'invention, le volet 40 du premier conduit 12 et le volet 30 d'obturation de l'orifice 26 sont entraînés par le même moyen de commande actionnable par l'occupant du véhicule et sont reliés entre eux par des moyens de transmission de mouvement de façon telle que, par exemple, le volet 30 passe brusquement de sa position de fermeture de l'orifice 26 à sa position de pleine ouverture de cet orifice lorsque le volet 40 quitte sa position de pleine ouverture (représentée en pointillé) pour gagner une position déterminée entre la position de pleine ouverture et la deuxième position de fermeture.

Cette installation de chauffage et de ventilation fonctionne de la façon suivante :

L'occupant du véhicule règle, à la valeur souhaitée, la température de l'air admis dans l'habitacle par les bouches de chauffage 24 au moyen d'une commande agissant sur le robinet 22 de réglage du débit de fluide caloporteur circulant dans l'échangeur de chaleur 20.

Lorsque le volet 40 est dans l'une ou l'autre de ses positions d'obturation du conduit 12, tout l'air extérieur amené dans l'installation par le conduit 10 traverse l'échangeur de chaleur 20 et pénètre dans l'habitacle par les bouches de chauffage 24.

Si l'occupant du véhicule fait tourner le volet 40 autour de l'axe 42 dans le sens des aiguilles d'une montre en figure 1, à partir de sa position d'obturation représentée en trait plein, le volet 30 reste en position d'obturation de l'orifice 26, de l'air frais circule dans le conduit 12 et gagne l'habitacle du véhicule par les bouches 14 et 16 avec un débit qui est réglé par la position du volet 40 entre sa première position d'obturation et sa position de pleine ouverture représentée en pointillé.

Dès que le volet 40, continuant à tourner dans le sens des aiguilles d'une montre autour de l'axe 42, dépasse sa position de pleine ouverture et se trouve dans une position quelconque entre cette position de pleine ouverture et sa seconde position d'obturation du conduit 12 (qui est écartée de 180° de la première position d'obturation), le volet 30 est automatiquement amené dans sa position de pleine ouverture de l'orifice 26, représentée en trait pointillé, et relie alors le conduit 36 au conduit 12 en les séparant du conduit 38. Dans ces conditions, un certain débit d'air frais, réglé par la position angulaire du volet 40 autour de l'axe 42, circule dans le conduit 12 et se mélange au débit d'air chaud circulant dans le conduit 36 avant de gagner les bouches d'aération 14 et les bouches 16 de chauffage des places arrière.

La température de l'air admis dans l'habitacle par les bouches d'aération 14, et par les bouches 16 de chauffage des places arrière, est donc réglable par rotation du volet 40 entre sa position de pleine ouverture et sa seconde position d'obturation du conduit 12, indépendamment du réglage de la température de l'air admis dans l'habitacle par les bouches de chauffage 24.

Lorsque le volet 40, par rotation dans le sens contraire des aiguilles d'une montre autour de l'axe 42, est ramené dans sa position de pleine ouverture, le volet 30 est ramené dans sa position d'obturation de l'orifice 26, de telle sorte que seul de l'air frais est admis dans l'habitacle par les bouches d'aération 14 et les bouches 16 de chauffage des places arrière.

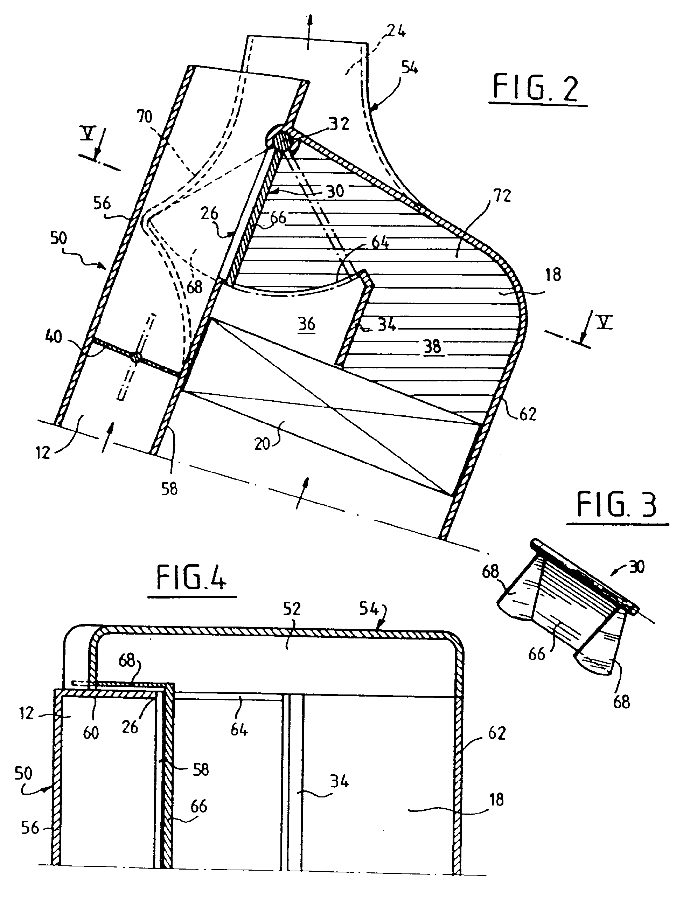

Les figures 2 à 4 concernent une autre variante de réalisation de l'installation selon l'invention, dans laquelle les conduits 10, 12, 18, 36 et 38 sont présentés par un premier boîtier 50, et le conduit 18 est relié aux bouches de chauffage 24 par des conduits 52 présentés par deux boîtiers latéraux 54 supportés sur les côtés du boîtier 50, un seul de ces boîtiers latéraux 54 étant représenté dans les figures 2 et 4. L'air circulant dans le conduit 18 peut ainsi être distribué par plusieurs bouches de chauffage 24 réparties de la façon désirée à l'avant de l'habitacle.

Dans le boîtier 50, le conduit 12 est défini par deux parois longitudinales 56, 58 dont l'une comprend l'orifice 26 de communication avec le conduit 36, et par deux parois latérales 60 dont une seule est représentée dans les figures 3 et 5.

Le conduit 18 est délimité en aval de l'échangeur 20 par la paroi longitudinale 58 et par une autre paroi longitudinale 62 du boîtier 50, ainsi que par les boîtiers latéraux 54. La cloison interne 34 séparant les conduits 36 et 38 est reliée à la paroi longitudinale 58 par deux cloisons latérales 64, dont une seule est représentée dans les figures 2 et 4, qui se terminent au niveau du bord amont de l'orifice 26 et de l'extrémité avant de la cloison 34.

Le volet 30, qui est monté à rotation autour d'un axe voisin du bord aval de l'orifice 36, comprend une paroi plane 66 et deux rebords latéraux 68 en forme de secteur circulaire, qui sont perpendiculaires à la paroi 68, comme représenté en figure 3.

Lorsque le volet 30 est dans la position de fermeture de l'orifice 26, ses deux rebords latéraux 68 s'étendent chacun dans un boîtier latéral 54 parallèlement à la paroi latérale correspondante du boîtier 50 et par exemple à l'extérieur de celui-ci, comme représenté sur les figures. Pour cela, chaque boîtier latéral 54 peut présenter un logement en saillie 70 destiné à recevoir un rebord latéral 68 du volet 30, comme représenté en figure 2. Dans cette postion du volet 30, tout l'air passant dans le conduit 18 peut pénétrer dans les boîtiers latéraux 54 par la section de passage formée à la jonction des boîtiers 50 et 54. Cette section est importante et correspond à la zone hachurée 72 de la figure 2.

Lorsque le volet 30 est en position de pleine ouverture de l'orifice 26, le bord libre de sa paroi plane vient sensiblement en contact de l'extrémité de la cloison 34, et ses rebords latéraux 68 forment un prolongement des cloisons latérales 64 du conduit 36 jusqu'à l'orifice 26, de sorte que tout l'air circulant dans le conduit 36 doit gagner le conduit 12 en passant par l'orifice 26, sans pouvoir s'échapper latéralement du conduit 36 pour passer dans le conduit 18 et les boîtiers latéraux 54.

La disposition des rebords latéraux 68 sur le volet 30 permet de ne pas prévoir de cloisons latérales fixes sur le boîtier 10 dans le prolongement des cloisons 64, qui auraient l'inconvénient de réduire la section de passage 72 vers chaque boîtier latéral 54 et donc de créer une perte de charge importante à ce niveau. Les rebords latéraux 68 du volet forment donc des cloisons latérales mobiles avec le volet, qui remplissent leur fonction de guidage de l'air quand le volet est en position d'ouverture de l'orifice 26, et qui sont escamotées et n'ont pas d'effet sur la circulation de l'air quand le volet est en position de fermeture de cet orifice.

L'invention est applicable également à une installation de climatisation ou de conditionnement d'air pour véhicule automobile, qui comprend un évaporateur formant moyen de refroidissement de l'air extérieur, placé dans le conduit 10 en amont de l'échangeur 20.

## Revendications

1. Installation de chauffage et de ventilation pour véhicule automobile, comprenant un conduit (10) d'alimentation en air extérieur, se partageant en un premier conduit (12) débouchant dans l'habitacle du véhicule par des bouches d'aération (14) et un second conduit (18) dans lequel est placé un échangeur de chaleur (20) pour le chauffage de l'air et qui débouche dans l'habitacle par des bouches de chauffage (24), un premier volet (40) monté dans le premier conduit (12) pour régler le débit d'air frais qui y passe, un passage (26) reliant le second conduit en aval de l'échangeur de chaleur (20) au premier conduit (12), et un deuxième volet (30) pour ouvrir et fermer ce passage, le premier volet (40) étant monté dans le premier conduit (12) en amont dudit passage (26) , tandis que ledit second volet (30), dans sa position d'ouverture du passage (26), délimite dans le deuxième conduit (18) un troisième conduit (36) qui mêne au passage (26) et un quatrième conduit (38) qui mène aux bouches de chauffage (24), le premier volet (40) étant relié au second volet (30) par des moyens de transmission de mouvement, caractérisé en ce que lesdits moyens de transmission de mouvement sont tels que, lorsque le premier volet (40) se trouve entre une première position de fermeture du premier conduit et une position intermédiaire d'ouverture, le second volet (30) se trouve dans sa position de fermeture du passage (26) et lorsque ledit premier volet (40) se trouve entre cette position intermédiaire d'ouverture et une deuxième position de fermeture du premier conduit (12), il commande l'ouverture complète du passage (26) par le second volet (30), de sorte que de l'air chaud peut circuler dans le premier conduit (12) vers les bouches d'aération (14) et en ce que l'échangeur de chaleur (20) est muni d'un moyen (22) de réglage du débit de fluide caloporteur qui y circule, pour le réglage de la température de l'air dans les troisième et quatrième conduits (36 et 38).

2. Installation selon la revendication 1, caractérisée en ce que le premier conduit (12) mène à des bouches d'aération (14) à l'avant de l'habitacle et/ou à des bouches (16) de chauffage des places arrière dans l'habitacle.

3. Installation selon l'une des revendications précédentes, caractérisée en ce que le passage (26) est formé dans une paroi (28) séparant le premier conduit (12) du deuxième conduit (18) et en ce que les troisième et quatrième conduits (36 et 38) sont séparés par une cloison (34) et partent de la face de sortie d'air de l'échangeur de chaleur (20) pour communiquer entre eux à l'extrémité aval du troisième conduit (36), cette extrémité étant fermée par le second volet (30), qui coopère alors à étanchéité avec ladite cloison lorsqu'il est en position d'ouverture du passage (26).

4. Installation selon l'une des revendications précédentes, caractérisée en ce que le volet (30) de fermeture du passage (26) comprend deux rebords latéraux (68) formant des cloisons latérales mobiles avec le volet qui, dans la position de fermeture du passage (26) par le volet (30), n'ont pas d'action sur le passage de l'air dans les divers conduits et qui, dans la position d'ouverture du passage (26) par le volet (30), ferment latéralement le conduit (36) pour obliger tout l'air qui y passe à gagner le premier conduit (12) par le passage (26).

## Patentansprüche

1. Heiz-Lüft-Anlage für ein Kraftfahrzeug, bestehend aus einer Außenluft-Zuführleitung (10), die sich in eine erste Leitung (12), welche durch Belüftungsöffnungen (14) in die Fahrzeugkabine einmündet, und eine zweite Leitung (18) teilt, worin ein Wärmeaustauscher (20) vorgesehen ist, der die Luft erwärmt und durch Heizungsöffnungen (24) in die Kabine einmündet, einer ersten Klappe (40), die in der ersten Leitung (12) zur Regelung der durchströmenden Frischluftmenge angebracht ist, einem Durchtritt (26) zur Verbindung der zweiten Leitung unterhalb des Wärmeaustauschers (20) mit der ersten Leitung (12) und einer zweiten Klappe (30) zum Öffnen und Schließen dieses Durchtritts, wobei die erste Klappe (40) in der ersten Leitung (12) oberhalb des Durchtritts (26) angebracht ist, während die genannte zweite Klappe (30) in geöffneter Stellung des Durchtritts (26) in der zweiten Leitung (18) eine dritte Leitung (36) begrenzt, die zum Durchtritt (26) führt, sowie eine vierte Leitung (38), die zu den Heizungsöffnungen (24) führt, wobei die erste Klappe (40) mit der zweiten Klappe (30) durch Bewegungsübertragungsmittel verbunden ist, **dadurch gekennzeichnet** daß die genannten Bewegungsübertragungsmittel so beschaffen sind, daß, wenn sich die erste Klappe (40) zwischen einer ersten Schließposition der ersten Leitung und einer mittleren Schließposition befindet, sich die zweite Klappe (30) in ihrer Schließposition des Durchtritts (26) befindet und daß, wenn sich die genannte erste Klappe (40) zwischen dieser mittleren Öffnungsposition und einer zweiten Schließposition der ersten Leitung (12) befindet, die vollständige Öffnung des Durchtritts (26) durch die zweite Klappe (30) in der Weise bewirkt wird, daß Heißluft durch die erste Leitung (12) in die Belüftungsöffnungen (14) gelangen kann und daß der Wärmeaustauscher (20) mit einem Mittel (22) zur Mengenregulierung der darin zirkulierenden Wärmeträgerflüssigkeit versehen ist, um die Temperatur der Luft in der dritten und vierten Leitung (36 und 38) zu regeln.

2. Anlage nach Anspruch 1, **dadurch ge****kennzeichnet,** daß die erste Leitung (12) zu Belüftungsöffnungen (14) an der Vorderseite der Kabine und/oder Heizungsöffnungen (16) im hinteren Teil der Kabine führt.

3. Anlage nach einem der vorherigen Ansprüche, **dadurch gekennzeichnet**, daß der Durchtritt (26) in einer Wand (28) ausgebildet ist, die die erste Leitung (12) von der zweiten Leitung (18) trennt, und daß die dritte und die vierte Leitung (36 und 38) durch eine Trennwand (34) voneinander getrennt sind und von der Luftausgangsseite des Wärmeaustauschers (20) ausgehen, um am unteren Ende der dritten Leitung (36) miteinander zu kommunizieren, wobei dieses Ende durch eine zweite Klappe (30) verschlossen ist, die dann dicht mit der genannten Trennwand zusammenwirkt, wenn sie sich in Öffnungsposition des Durchtritts (26) befindet.

4. Anlage nach einem der vorherigen Ansprüche, **dadurch gekennzeichnet,** daß die Klappe (30) zum Verschließen des Durchtritts (26) zwei seitliche Ränder (68) enthält, die bewegliche Seitentrennwände mit der Klappe bilden, die in Schließstellung des Durchtritts (26) mittels der Klappe (30) nicht auf den Luftdurchtritt in den verschiedenen Leitungen einwirkt und wodurch in Öffnungsstellung des Durchtritts (26) mittels der Klappe (30) die Leitung (36) seitlich verschlossen wird, um die gesamte hindurchtretende Luft über den Durchtritt (26) zu der ersten Leitung (12) zu führen.

## Claims

1. A heating and ventilating installation for a motor vehicle, comprising a duct (10) for supply of air from outside, dividing into a first duct (12) which exhausts into the cabin of the vehicle through fresh air outlet vents (14), and a second duct (18) in which a heat exchanger (20) is placed for heating the air, and which exhausts into the cabin through warm air vents (24), a first flap valve (40) mounted in the first duct (12) for regulating the flow of fresh air passing through it, a port (26) connecting the second duct with the first duct (12) downstream of the heat exchanger (20), and a second flap valve (30) for opening and closing the said port, the first flap valve (40) being mounted in the first duct (12) upstream of the said port (26), while the said second flap valve (30), in the position in which it opens the port (26), delimits in the second duct (18) a third duct (36) which leads to the port (26), together with a fourth duct (38) which leads to the warm air vents (24), the first flap valve (40) being connected to the second flap valve (30) through motion transmission means, characterised in that the said motion transmission means are such that, when the first flap valve (40) is intermediate between a first position closing the first duct and an intermediate opening position, the second flap valve (30) is in the position in which it closes the port (26), while when the said first flap valve (40) is between the said intermediate opening position and a second position closing the first duct (12), it controls the complete opening of the port (26) by the second flap valve (30), whereby warm air can flow in the first duct (12) towards the fresh air vents (14), and in that the heat exchanger (20) is provided with means (22) for regulating the flow of heat exchange fluid passing through it, for regulating the temperature of the air in the third and fourth ducts (36 and 38).

2. An installation according to Claim 1, characterised in that the first duct (12) leads to fresh air vents (14) at the front of the cabin and/or to vents (16) for heating rear locations in the cabin.

3. An installation according to one of the preceding Claims, characterised in that the port (26) is formed in a wall (28) which separates the first duct (12) from the second duct (18), and in that the third and fourth ducts (36 and 38) are separated by a bulkhead (34) and extend from the air outlet face of the heat exchanger (20), so as to communicate with each other at the downstream end of the third duct (36), the said end being closed by the second flap valve (30), which thus cooperates sealingly with the said bulkhead when it is in the position in which the port (26) is open.

4. An installation according to one of the preceding Claims, characterised in that the flap valve (30) for closing the port (26) has two side flanges (68) which define lateral partitions movable with the flap valve and which, in the position in which the port (26) is closed by the flap valve (30), have no effect on the passage of air into the various ducts, and which also, in the position in which the flap valve (30) opens the port (26), close the duct (36) laterally, so that all of the air which passes through the latter is compelled to reach the first duct (12) through the port (26).
